# EUROPÄISCHE PATENTSCHRIFT

(11) **EP 1 487 226 B1**
(45) Veröffentlichungstag und Bekanntmachung des Hinweises auf die Patenterteilung: **21.06.2006**
(21) Anmeldenummer: 04022090.7
(22) Anmeldetag: 30.04.1997
(51) Int. Cl.: H04Q 7/34

(54) **Verfahren zum Überprüfen der Leitweglenkung und Gebührenerfassung in einem Mobilkommunikationsnetz**
Method for examination of the routing and metering in a mobile communication network
Procédé pour examiner le routage et la taxation dans un réseau de communication mobile

(30) Priorität: 08.05.1996 DE 19620164
(43) Veröffentlichungstag der Anmeldung: 15.12.2004
(62) Teilanmeldung aus: 97250148.0
(73) Patentinhaber: Agilent Technologies Inc, Palo Alto, CA 94306-2024 (US)
(72) Erfinder: Long, Derek, Dr.-Ing., 40225 Düsseldorf (DE); Hengels, Erik, Dipl.-Ing., 41352 Korschenbroich (DE)
(74) Vertreter: Schoppe, Fritz

(56) Entgegenhaltungen:
- EP-A- 0 418 853
- EP-A- 0 589 576
- WO-A-94/27385
- ROSAR W: "TESTSTRATEGIEN, MESSGERAETE UND -SYSTEME IM GSM - TEIL 1" NTZ NACHRICHTENTECHNISCHE ZEITSCHRIFT, Bd. 47, Nr. 9, 1. September 1994 (1994-09-01), Seiten 654-658, XP000468041 ISSN: 0027-707X
- ROSAR W: "TESTSTRATEGIEN, MESSGERATE UND -SYSTEME IM GSM. TEIL 2" NTZ NACHRICHTENTECHNISCHE ZEITSCHRIFT, Bd. 47, Nr. 10, 1. Oktober 1994 (1994-10-01), Seiten 726-730, 732, XP000473217 ISSN: 0027-707X

## Beschreibung

Die Erfindung betrifft ein verfahren zur Überprüfung der Leitweglenkung und Gebührenerfassung in einem Mobilkommunikationsnetz.

Mobilkommunikationsnetze sind hinsichtlich ihres Aufbaus bekannt und insbesondere in Jacek Biala" Mobilfunk und intelligente Netze", Friedrich Vieweg & Sohn Verlagsgesellschaft mbH, Braunschweig/Wiesbaden. 1995 ausführlich beschrieben.

Ein derartiges Mobilkommunikationsnetz besteht im wesentlichen aus einer Mehrzahl untereinander vernetzter Vermittlungssysteme an die sogenannte Basisstationssysteme anschließbar sind sowie einer Vielzahl von Mobilteilnehmern. Die Vermittlungssysteme bestehen dabei zumindest aus einer Vermittlungseinrichtung und einer Mehrzahl von Datenbanken zur Verwaltung von Mobilteilnehmerdaten. Die im Zusammenhang mit der Erfindung wichtigsten Datenbanken sind die Heimatdatenbank (HLR, Home Location Register), die Besucherdatenbank (VLR, Visitors Location Register) und die Authentisierungszentrale (AUC, Authentication Center). Darüber hinaus weisen die Vermittlungssysteme des Mobilkommunikationsnetzes Schnittstellen zu anderen Kommunikationsnetzen auf.

In der Heimatdatenbank, HLR, werden die Stammdaten eines jeden Kunden gespeichert. Hier stehen permanente Kundendaten wie beispielsweise die internationale Teilnehmerkennung (IMSI, International Mobil Subscriber Identity), die internationale Mobilteilnehmerrufnummer (MSISDN, Mobil Station ISDN Number), der Authentisierungsschlüssel und auch temporäre Daten wie beispielsweise die Adresse der Besucherdatenbank (VLR-Adresse) des letzten bzw. aktuellen Aufenthaltsortes des Mobilteilnehmers.

In der Besucherdatenbank (VLR) werden die Daten aller Kunden und Mobilstationen gespeichert, die im Einzugsbereich der entsprechenden Vermittlungseinrichtung aktiv sind.

Mit Hilfe der Authentisierungszentrale (AUC), die der Heimatdatenbank (HLR) angegliedert ist, ist prüfbar, ob ein Kunde im Besitz einer gültigen SIM-Karte ist und somit die Berechtigung zur Inanspruchnahme von Diensten des Mobilkommunikationsnetzes aufweist. Dabei ist die SIM-Karte (Subscriber Identity Module) zusammen mit einer persönlichen Identifikationsnummer der physische Teil der Zugangsberechtigung zu Diensten des Mobilkommunikationsnetzes. Jeder mit einer Berechtigungskarte (SIM) ausgestattete Mobilteilnehmer ist in der Lage mit mindestens einem Basisstationssystem in Funkverbindung zu treten.

Die Basisstationssysteme umfassen alle Mittel zur Kommunikation mit einer Mehrzahl von Mobilteilnehmern und zur bidirektionalen Weiterleitung empfangener und zu sendender Signale zur und von der angeschlossen Vermittlungseinrichtung.

In einem derartigen Mobilkommunikationsnetz treten sowohl in der Aufbauphase als auch während des laufenden Betriebes häufig Änderungen in der Netzkonfiguration ein, die durch punktuelle Softwareaktualisierung einzelner Vermittlungssysteme oder durch Erweiterungen der physischen Netzstruktur infolge zusätzlicher Basisstationen hervorgerufen werden, in deren Folge zumindest Teile des Mobilkommunikationsnetzes hinsichtlich ihrer Funktionsfähigkeit zu testen sind. Die Testvorgänge umfassen dabei Signalisierungsprozeduren, Kanalauf- und -abbau sowie die Leitweglenkung und Gebührenerfassung.

Die Leitweglenkung, das sogenannte Routing, umfaßt alle Vorgänge zur Auswahl von Netzverknüpfungen zwischen verschiedenen Vermittlungssystemen zur Herstellung einer Verbindung zwischen einem im Einzugsbereich eines ersten Vermittlungssystems rufenden Teilnehmers und einem im Einzugsbereich eines zweiten Vermittlungssystems angeordneten angerufenen Teilnehmers. Darüber hinaus ist die Konsistenz der in den angegliederten Datenbanken jedes Vermittlungssystems enthaltenen Daten zu prüfen.

Infolge der Vielzahl von Signalisierungsmöglichkeiten und gegenseitiger Herstellung von Gesprächsverbindungen sind derartige Tests sehr aufwendig und stellen zudem eine zusätzliche Belastung der Netzkapazität dar. Wenngleich diese Tests vornehmlich in verkehrsschwachen Zeiten, insbesondere während der Nacht, durchgeführt werden, ist der Zeitaufwand für die vollständige Austestung aller Systemeigenschaften zumindest bei manueller Durchführung so zeitaufwendig, daß das Zeitfenster der verkehrsschwachen Zeit oft nicht ausreicht. Andererseits ist es erforderlich, alle vorgenommenen Änderungen vor der Freigabe der Systembestandteile für gebührenpflichtige Nutzer ausgiebig und umfassend getestet zu haben.

Es ist bekannt in der Entwicklungs-, Aufbau- und Inbetriebnahmephase eines GSM_Netzes komplexe Testsysteme zur Anwendung zu bringen. So sind z.B. in dem Aufsatz "Teststrategien, Meßgeräte und -systeme im GSM",ntz,1994,Heft 9 und 10, Seiten 654 bis 658 und 726 bis 732, Testverfahren für die folgenden Testaufgaben beschrieben:
- Test der physikalischen Parameter
- Protokolltest- Test einzelner Protokollmechanismen
- Test des Protokollablaufs von Funktionen und Diensten
- Test der Leistungsfähigkeit des Netzes oder von Komponenten
- Test der Qualität der Dienste
- Test des Protokoll- und Lastverhaltens
- Test des Mobilvermittlungssystems
- Test des Basissubsystems
- Test der Basisstations-, Sende- und Empfangseinrichtung
- Test der Mobilstationen und
- Test des Übergangs vom GSM in das Festnetz.

Die Vielzahl der erforderlichen Tests stellt hinsichtlich zeitlichem und gerätemäßigem Aufwand hohe Anforderungen an den Netzbetreiber.

Aus der EP 0418853 A ist bereits ein System bekannt, um innerhalb eines Mobilkommunikationssystems zu bestimmen, ob eine Leitungsverbindung den richtigerweise zwischen einer Radiobasisstation und einer Mobilstation ausgeführt worden ist. Ein derartiges System dient im Gegensatz zu der beanspruchten Testeinrichtung nicht zur Überprüfung der Leitweglenkung und Gebührenerfassung in einem Mobilkommunikationsnetz.

Aus der EP 0589576 A ist ein System zum Testen von Kommunikationsnetzwerk-Komponenten bekannt, das sich eines Simulators zum Emulieren von Kommunikationen längs relevanter Netzwerkeinheiten bedient. Dieses bekannte System beurteilt, ob eine Verarbeitung in den Komponenten des Netzwerks stattfindet. Ein Sprachprozessor liefert eine Schnittstelle für einen Tester, um den Simulator und den Nachrichtenprozessor anzusteuern.

Der Erfindung liegt daher die Aufgabe zugrunde, die Vielzahl der erforderlichen Tests zu automatisieren und dabei hinsichtlich der vorgenommenen Änderungen in dem zu testenden Mobilkommunikationsnetz zu systematisieren und den änderungsindividuellen Testablauf zu betreiben.

Erfindungsgemäß wird diese Aufgabe durch ein Verfahrengemäβ Patentansprüch 1 gelöst.

Bevorzugte Ausführungsbeispiele der vorliegenden Erfindung werden nachfolgend unter Bezugnahme auf die beiliegenden Zeichnungen näher beschrieben. Es zeigen:
Fig. 1 ein Blockdiagramm einer Testeinrichtung zur Überprüfung der Leitweglenkung und der Gebührenerfassung in einem Mobilkommunikationsnetz;
Fig. 2 ein Blockdiagramm eines Multiplexers als Bestandteil der in Fig. 1 gezeigten Testeinrichtung; und
Fig. 3 ein Blockdiagramm zur Erläuterung eines Verfahrens zum Testen eines Mobilkommunikationsnetzes mittels zweier Testeinrichtungen.

Die Erfindung wird nachstehend anhand eines Ausführungsbeispiels näher erläutert.

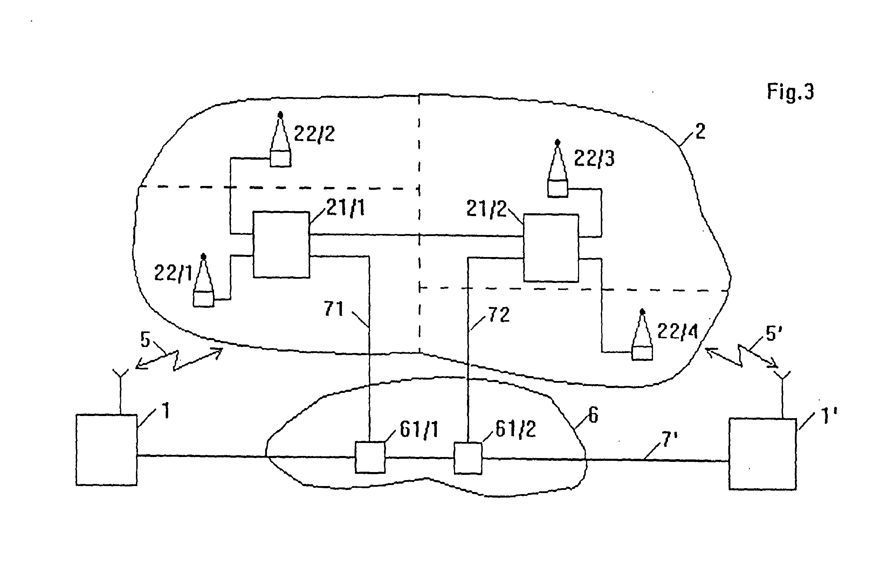

Unter Bezugnahme auf Figur 3 wird von einem für sich bekannten Mobilkommunikationsnetz 2 ausgegangen, das im wesentlichen aus einer Mehrzahl untereinander vernetzter Vermittlungssysteme 21/1 und 21/2 besteht, die mit Basisstationssystemen 22/1 bis 22/4 verbunden sind. Des weiteren gehören Mobilteilnehmer zum Mobilkommunikationsnetz 2, die jeweils mit einem kartenartigen Datenmodul ausgestattet sind und mit mindestens einem Basisstationssystem 22/1 bis 22/4 in Funkverbindung treten können.

Dabei besteht jedes Vermittlungssystem 21/1 und 21/2 aus einer Vermittlungseinrichtung und einer Mehrzahl von Datenbanken zur Verwaltung von Mobilteilnehmerdaten. Diese Datenbanken umfassen die Heimatdatenbank (HLR), in der die Stammdaten eines jeden Kunden gespeichert werden, die Besucherdatenbank (VLR), in der die Daten aller Kunden und Mobilteilnehmer gespeichert werden, die sich aktuell im Einzugsbereich des jeweiligen Vermittlungssystems 21/1 und 21/2 befinden, die Authentisierungszentrale (AUC), mit der geprüft wird, ob ein Kunde im Besitz eines gültigen Datenmoduls (SIM-Karte) ist, und das Geräte-Identitätsregister (EIR), in dem die Seriennummern der Mobilteilnehmer gespeichert werden.

Darüber hinaus werden in der Heimatdatenbank (HLR) die internationale Teilnehmerkennung (IMSI), die internationale Mobilteilnehmerrufnummer (MSISDN), der Authentisierungsschlüssel und ein Zeiger auf dasjenige Vermittlungssystem 21/1 und 21/2, in dessen Einzugsbereich sich ein in der Heimatdatenbank (HLR) registrierter Mobilteilnehmer aktuell befindet oder zuletzt befunden hat.

Jedes Vermittlungssystem 21/1 und 21/2 kann darüber hinaus Schnittstellen bzw. Zugänge 71 und 72 zu anderen Kommunikationsnetzen 6 aufweisen.

Die Basisstationssysteme 22/1 bis 22/3 umfassen jeweils Basisstationen und zugehörige Steuereinrichtungen.

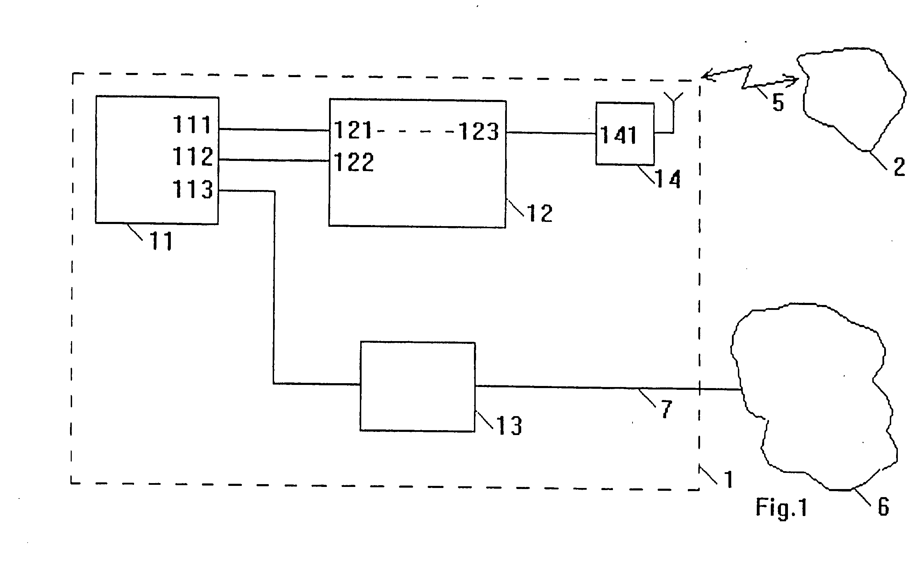

Die Testeinrichtung 1 zur Überprüfung der Leitweglenkung und der Gebührenerfassung in einem derartigen Mobilkommunikationsnetz 2 weist gemäß Figur 1 einen Steuerrechner 11, eine Multiplexereinrichtung 12 und einen Mobilteilnehmer 14 auf, wobei der Mobilteilnehmer 14 eine drahtgebundene Kommunikationsschnittstelle 141 aufweist. Beispielsweise verfügt das Gerät GH 198 der Fa. Ericsson neben der drahtlosen Funkschnittstelle 5 zum Mobilkommunikationsnetz 2 über eine drahtgebundene serielle Schnittstelle, über die das Betätigen aller Zifferntasten und der Befehlstasten emulierbar ist und über die der Status des Geräts auslesbar ist. Anstelle des einzufügenden Datenmoduls weist der Mobilteilnehmer 14 ein Adaptermodul auf, das elektrisch mit der Kommunikationsschnittstelle 141 verbunden ist.

Die Multiplexereinrichtung 12 ist zur Aufnahme und wechselweisen Bedienung einer Mehrzahl von Datenmodulen ausgestattet. Zweckmäßigerweise sind die in der Multiplexereinrichtung 12 bedienbaren Datenmodule in Heimatdatenbanken (HLR) verschiedener Vermittlungssysteme 21/1 und 21/2 registriert. Die Multiplexereinrichtung 12 weist eine Mobilteilnehmerschnittstelle 123 auf, die mit der Kommunikationsschnittstelle 141 des Mobilteilnehmers 14 verbunden ist. Darüber hinaus weist die Multiplexereinrichtung 12 eine serielle Schnittstelle 121 und eine parallele Schnittstelle 122 zur Kommunikation mit dem Steuerrechner 11 auf.

Der Steuerrechner 11 weist mindestens eine serielle Schnittstelle 111 und eine parallele Schnittstelle 112 auf, die typgerecht mit der seriellen Schnittstelle 121 und der parallelen Schnittstelle 122 der Multiplexereinrichtung 12 verbunden sind. Der Steuerrechner 11 ist dabei derart mit der Multiplexereinrichtung 12 verbunden, daß jeweils eines der Datenmodule in der Multiplexereinrichtung 12 selektiert ist und daß genau jenes selektierte Datenmodul im Mobilteilnehmer 14 über das Adaptermodul emuliert ist.

Der Steuerrechner 11 weist darüber hinaus für sich bekannte Speichermittel auf, in denen ein Programm geladen ist, das den Ablauf der einzelnen Testroutinen und deren Aufeinanderfolge bestimmt. Dazu ist der Steuerrechner 11 zumindest virtuell mit der drahtgebundenen Kommunikationsschnittstelle 141 des Mobilteilnehmers 14 verbunden.

Darüber hinaus weist der Steuerrechner 11 Mittel zur Protokollierung der Testroutinen und der während der Tests anfallenden Gebühren auf. Zweckmäßigerweise ist der Steuerrechner als für sich bekannter Personalcomputer ausgeführt.

Vorteilhafterweise sind mit einer derartig ausgestatteten Testeinrichtung bereits im Wege der Signalisierungsverkehrs die Abarbeitungsschritte der Leitweglenkung von und zu verschiedenen Vermittlungssystemen entsprechend der gewählten Rufnummer und der heimatlichen Registrierung der verwendeten Datenmodule effizient und vollständig in kurzer Zeit und zu beliebigen Zeiten prüfbar.

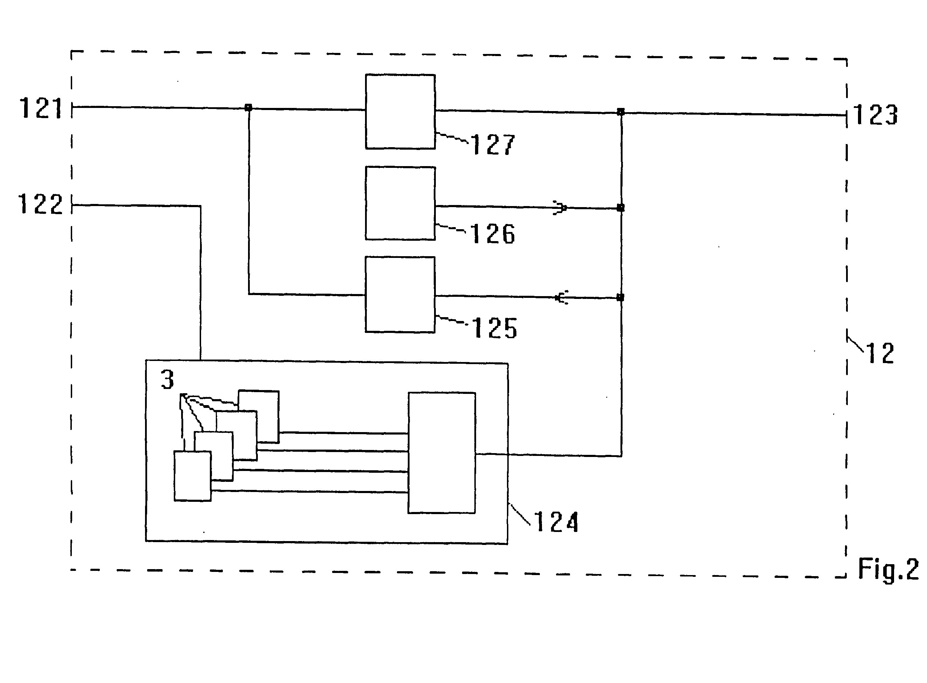

In Ausgestaltung der Erfindung weist die Multiplexereinrichtung 12 gemäß Figur 2 Mittel zur Signalumsetzung 127 von der seriellen Schnittstelle 111 des Steuerrechners 11, die mit der seriellen Schnittstelle 121 der Multiplexereinrichtung 12 verbunden ist, zu der drahtgebundenen Kommunikationsschnittstelle 141 des Mobilteilnehmers 14, die mit der Mobilteilnehmerschnittstelle 123 verbunden ist, auf. Vorteilhafterweise werden damit unterschiedliche Signalpegel zwischen dem Steuerrechner 11 und dem Mobilteilnehmer 14 überbrückt.

In weiterer Ausgestaltung der Erfindung ist die Multiplexereinrichtung 12 zum Sprachkanaltest für die Senderichtung mit einem NF-Generator 126 mit vorgegebener Testfrequenz und für die Empfangsrichtung mit einem auf diese vorgegebene Testfrequenz abgestimmten Frequenzdiskriminator 125 ausgestattet. Dabei sind der Ausgang des NF-Generators 126 und der Eingang des Frequenzdiskriminator 125 mit der Mobilteilnehmerschnittstelle 123 der Multiplexereinrichtung 12 verbunden.

Der Ausgang des Frequenzdiskriminators 125 ist mit der seriellen Schnittstelle 121 der Multiplexereinrichtung 12 verbunden. An diesem Ausgang ist das Vorliegen oder Fehlen der empfangenen Testfrequenz detektierbar.

Vorteilhafterweise sind mit diesen Mitteln neben der Überprüfung der Leitweglenkung auch Prüfungen des für die Sprachkommunikation erforderlichen Verkehrskanals möglich.

Weiterhin ist in Figur 2 ein Kartenleser 124 dargestellt, der geeignet ist, eine Mehrzahl von Datenmodulen 3 aufzunehmen und selektiv zu aktivieren. Der Kartenleser 124 ist steuerseitig mit der parallelen Schnittstelle 122 der Multiplexereinrichtung 12 und datenseitig mit der Mobilteilnehmerschnittstelle 123 verbunden.

In weiterer Ausgestaltung der Erfindung ist ein Modem 13 vorgesehen, das an eine serielle Schnittstelle 113 des Steuerrechners 11, siehe hierzu Figur 1, angeschlossen ist und über eine Anschlußleitung 7 mit einem vom Mobilkommunikationsnetz 2 unabhängigen zweiten Kommunikationsnetz 6 verbindbar ist. Als zweites Kommunikationsnetz 6 kann dabei ein Festnetz vorgesehen sein.

Vorteilhafterweise sind über das zweite Kommunikationsnetz 6 mehrere gleichartig aufgebaute Testeinrichtungen 1 unabhängig von Einrichtungen des zu testenden Mobilkommunikationsnetzes 2 hinsichtlich der jeweils vorgesehenen Testschritte aufeinander synchronisierbar.

Zur Überprüfung der Leitweglenkung innerhalb des Mobilkommunikationsnetzes 2 ist vorgesehen, daß die steckbaren Datenmodule 3 derselben Multiplexereinrichtung 12 jeweils in Heimatdatenbanken verschiedener Vermittlungssysteme 21/1 und 21/2 desselben Mobilkommunikationsnetzes 2 registriert sind.

In weiterer Ausgestaltung der Erfindung ist zur Überprüfung der Leitweglenkung zwischen verschiedenen Mobilkommunikationsnetzes 2 vorgesehen, daß die steckbaren Datenmodule 3 derselben Multiplexereinrichtung 12 jeweils in Heimatdatenbanken verschiedener Vermittlungssysteme 21/1 und 21/2 verschiedener Mobilkommunikationsnetze 2 registriert sind.

Beim Verbindungsaufbau wird in Abhängigkeit von dem selektierten Datenmodul 3 zunächst die Heimatdatenbank des Vermittlungssystems, bei dem das selektierte Datenmodul registriert ist, auf die Berechtigungen zum Netzzugang zum Mobilkommunikationsnetz 2 abgefragt. Unabhängig davon, ob das befragte Vermittlungssystem Bestandteil des Mobilkommunikationsnetzes 2, von dem der Verbindungsaufbau initiiert wird, ist, erfolgt ein Signalisierungsverkehr dessen Ablauf Rückschlüsse auf die Schritte der Leitweglenkung sowohl netzintern als auch netzübergreifend gestattet. In Abhängigkeit von der gewählten Rufnummer wird in darüber hinausgehendem Signalisierungsverkehr die Heimatdatenbank des Vermittlungssystems, in dem der gerufene Mobilteilnehmer registriert ist, angesprochen, das einen Zeiger auf das Vermittlungssystem zurückgibt, in dessen Einzugsbereich sich der gerufene Mobilteilnehmer aktuell befindet oder zuletzt befunden hat. In besonders vorteilhafter Weise kann dabei sowohl das Vermittlungssystem, das die Heimatdatenbank des gerufenen Mobilteilnehmers umfaßt, als auch das Vermittlungssystem, in dessen Einzugsbereich sich der Mobilteilnehmer befindet oder zuletzt befunden hat, sowohl innerhalb als auch außerhalb des Mobilkommunikationsnetzes 2 befinden, von dem der Verbindungsaufbau initiiert wird.

Mit anderen Worten ist in dieser Ausgestaltung auch die Funktion des sogenannten international roaming" prüfbar, bei dem regelmäßig national begrenzte Mobilkommunikationsnetze 2 verlassen werden. Dabei kann sowohl die Rufinitialisierung von einem fremden Mobilkommunikationsnetz ausgehend an einen Mobilteilnehmer im zu prüfenden Mobilkommunikationsnetz 2 gerichtet sein, als auch von dem zu prüfenden Mobilkommunikationsnetz 2 ausgehend an einen Mobilteilnehmer in einem fremden Mobilkommunikationsnetz gerichtet sein. Dabei kann sowohl der rufende als auch der gerufene Mobilteilnehmer in dem zu prüfenden Mobilkommunikationsnetz 2 registriert sein, aber sich aktuell im Einzugsbereich eines fremden Mobilkommunikationsnetzes aufhalten.

In weiterer Ausgestaltung der Erfindung ist vorgesehen, daß der Steuerrechner 11 mit einem Programm zur Selektion jeweils eines der Datenmodule 3, zur Abarbeitung einer datenmodulspezifizierbaren Folge vordefinierter Befehle zur ferngesteuerten Bedienung des Mobilteilnehmers 14, zur Erfassung und Protokollierung der einzelnen, durch die Befehle absolvierten Testschritte und zur Erfassung und Protokollierung der durch die Abarbeitung der einzelnen Testschritte verursachten Gebühren ausgestattet ist. Zweckmäßigerweise umfaßt der Befehlsvorrat dabei mindestens:
a) einen Befehl, mit dem der Mobilteilnehmer eingeschaltet sowie der Initialisierungsvorgang mit einem selektierten Datenmodul 3 angestoßen und überwacht wird,
b) einen Befehl, der den Gesprächsaufbau von Mobilteilnehmer 14 der Testeinrichtung 1 zu einer vorgebbaren Testrufnummer startet, für eine vorgegebene Dauer hält und überwacht,
c) einen Befehl zur Initiierung einer Verbindung vom Mobilteilnehmer 14 der Testeinrichtung 1 zu einem vorgebbaren Mobilteilnehmer 14, der Bestandteil einer gleichartig aufgebauten zweiten Testeinrichtung 1', ist,
d) einen Befehl zum Aufbau einer Verbindung zwischen dem Mobilteilnehmer 14 der Testeinrichtung 1 zum Modem 13 einer zweiten Testeinrichtung 1,
e) einen Befehl zum Aufbau einer Verbindung zwischen dem Modem 13 der Testeinrichtung 1 zum Mobilteilnehmer 14 einer vorgebbaren zweiten Testeinrichtung 1'.

Darüber hinaus können Befehle zur Kommunikation zwischen den Modems 13 der Testeinrichtungen 1 und 1' vorgesehen sein. Weiterhin kann vorgesehen sein, daß das Programm Mittel zum ereignisgesteuerten Empfang von Synchronisationsbefehlen und Leitweginformationen und deren Protokollierung umfaßt. Im einzelnen kann dazu vorgesehen sein, daß die den Testvorgang initiierende Testeinrichtung 1 über einen Verbindungsweg im alternativen Kommunikationsnetz 6 eine vorgebbare andere Testeinrichtung 1' über einen Anruf darauf vorbereitet, daß in einem vorgegebenen Zeitfenster ein Verbindungsaufbau von einer bestimmten Testeinrichtung aus vorgenommen wird.

Neben Testvorgängen, die sich im wesentlichen auf den Austausch von Signalisierungsinformationen zwischen einer Testeinrichtung 1 und einem oder mehreren der Vermittlungssysteme 21/1 und 21/2 beziehen, werden mit dem Gegenstand der Erfindung Testvorgänge ermöglicht, die zwischen zwei Endeinrichtungen ausgeführt werden. Dazu werden mindestens zwei gleichartige Testeinrichtungen 1 und 1' vorgesehen, die wechselweise als Master 1 und Slave 1' betrieben werden, wobei der jeweilige Master 1 die den jeweiligen Testvorgang initialisierende Einrichtung und jeder Slave 1' eine auf den Testvorgang wartende und reagierende Einrichtung ist. Im einzelnen ist dabei vorgesehen, daß in der jeweiligen Mastereinrichtung 1 die Datenmodule 3 aufeinanderfolgend selektiert und aktiviert werden, wobei das selektierte und aktivierte Datenmodul im Mobilteilnehmer 14 emuliert wird. Für jedes Datenmodul wird eine vorgebbare Folge vordefinierter Anweisungen an den Mobilteilnehmer 14 gerichtet, in dem die Anweisungen in adäquate Kommunikationsaktionen mit Einrichtungen des Mobilkommunikationsnetzes 2 umgesetzt werden. Dazu werden über die Funkschnittstelle 5 Informationen mit einem der Basisstationssysteme 22/1 bis 22/4 ausgetauscht, die jeweils mit einem der Vermittlungssysteme 21/1 oder 21/2 verbunden sind. Darüber hinaus werden in der jeweiligen Mastereinrichtung 1 jede der vorgegebenen Kommunikationsaktionen zusammen mit der zugehörigen Reaktion jeder Slaveeinrichtung 1' protokolliert.

In jeder Slaveeinrichtung 1' wird jede masterseitig verlangte Kommunikationsanforderung entsprechend vordefinierter Anweisungsfolgen ausgeführt und jede masterseitig verlangte Kommunikationsanforderung zusammen mit der zugehörigen eigenen Reaktion protokolliert.

In vorteilhafter Weise ergibt sich aus der zweiseitigen Protokollierung sowohl auf seiten der jeweiligen Mastereinrichtung 1 als auch auf seiten der jeweiligen Slaveeinrichtung 1', daß auftretende Fehler während jeder einzelnen Testprozedur transparent werden, indem die im fehlerfreien Fall identischen Protokolle auf Abweichungen verglichen werden.

Darüber hinaus kann vorgesehen sein, daß jede an einem Testvorgang beteiligte Slaveeinrichtung 1' durch die jeweilige Mastereinrichtung 1 auf die Kommunikationsanforderungen des Testvorganges synchronisiert wird.

Im einzelnen kann dabei vorgesehen sein, die vorgesehene Slaveeinrichtung 1' zu aktivieren, auf einen eingehenden Anruf vorzubereiten und in einen Schlummerzustand zu versetzen, wobei der tatsächlich eingehende Anruf die beteiligte Slaveeinrichtung 1' aus dem Schlummerzustand in den aktiven Zustand versetzt.

Dabei kann im weiteren vorgesehen sein, daß diese Synchronisation der an einem Testvorgang beteiligten Testeinrichtungen 1 und 1' über ein zweites, vom zu testenden Mobilkommunikationsnetz 2 unabhängiges Kommunikationsnetz 6 durchgeführt wird. Dabei kann vorgesehen sein, daß die Synchronisation über eine Modemverbindung geschaltet wird. Ausgehend vom Modem 13 der Mastereinrichtung 1 wird dabei über eine Festnetzanschlußleitung 7 eine Verbindung mit dem Festnetz 6 hergestellt, das aus einer Mehrzahl untereinander verbundener Festnetivermittlungsstellen 61/1 und 61/2 aufgebaut ist und über eine weitere Festnetzanschlußleitung 7' wird eine Verbindung des Modems 13 der Slaveeinrichtung 1' mit dem Festnetz 6 hergestellt.

In weiterer Ausgestaltung der Erfindung kann vorgesehen sein, daß nach Ablauf des Testvorganges die in jeder Testeinrichtung 1 und 1' protokollierten Gebührendaten mit den in dem Vermittlungssystem 21/1 und 21/2 des Mobilkommunikationsnetzes 2 umfaßten Gebührendaten verglichen werden. Darüber hinaus ist vorgesehen, daß nach Ablauf des Testvorganges die in der Mastereinrichtung 1 protokollierten Testschritte mit denen der in den beteiligten Slaveeinrichtungen 1' protokollierten Testschritten verglichen werden.

Nachstehend werden die mit der oben beschriebenen Testeinrichtung durchführbaren Testvorgänge im einzelnen unter Bezugnahme auf Figur 3 näher beschrieben.

Ein erster Testvorgang ist darauf ausgerichtet, den Mobilteilnehmer 14 jeweils unter Emulation eines der Datenmodule im Mobilkommunikationsnetz 2 bekanntzumachen. Dazu wird in der Master-Testeinrichtung 1 programmgesteuert nacheinander jeweils eines der Datenmodule selektiert, aktiviert und im Mobilteilnehmer emuliert. Dazu wird der Mobilteilnehmer ferngesteuert eingeschaltet, der sodann beginnt, über die Funkschnittstelle 5 mit dem nächstgelegenen Basisstationssystem 22/1 zu kommunizieren. Dabei wird das Signalisierungsprotokoll der Funkschnittstelle 5 überprüft. Im weiteren wird aus den vom emulierten Datenmodul übertragenen Daten das Vermittlungssystem ermittelt, in dessen Heimatdatenbank (HLR) das Datenmodul registriert ist. Dabei werden die Signalisierungsprotokolle zwischen dem über die Funkschnittstelle 5 angesprochenem Basisstationssystem 22/1 und dem angeschlossenen Vermittlungssystemen 21/1 und 21/2 überprüft. Darüber hinaus wird die Funktionsweise der Leitweglenkung zu dem Vermittlungssystem überprüft, in dessen Heimatdatenbank das emulierte Datenmodul registriert ist.

Beim bestimmungsgemäßen Gebrauch des Mobilkommunikationsnetzes 2 werden diese Prozeduren bei jedem sogenannten "location update" durchgeführt bei dem der aktuelle Aufenthaltsort eines mit einem bestimmten Datenmodul ausgestatteten Mobilteilnehmers aktualisiert und in der Besucherdatenbank (VLR) des Vermittlungssystems, in dessen Einzugsbereich sich der Mobilteilnehmer aktuell befindet, verwaltet wird. Darüber hinaus wird in der Heimatdatenbank (HLR) des Vermittlungssystems, in der das Datenmodul registriert ist, ein Zeiger auf das Vermittlungssystem hinterlegt, in dem sich der Mobilteilnehmer aktuell aufhält.

In einem zweiten Testvorgang ist vorgesehen, eine Verbindung zwischen zwei Mobilteilnehmern herzustellen. Dabei wird unterschieden, ob die Rufinitialisierung vom Mobilteilnehmer der Master-Testeinrichtung 1 oder der Slave-Testeinrichtung 1' ausgehen soll.

In einer ersten Variante wird der Ruf ausgehend von der Master-Testeinrichtung 1 initiiert. Dabei wird unter Emulation eines beliebigen Datenmoduls im Mobilteilnehmer der Master-Testeinrichtung 1, durch den Steuerrechner initiiert, die Rufnummer, die zu einem der Datenmodule in der Slave-Testeinrichtung 1' gehört, gewählt. Wesentlicher Bestandteil dieses Testvorganges ist die Rufnummernanalyse in dem Vermittlungssystem 21/1, in dessen Einzugsbereich sich die Master-Testeinrichtung 1 befindet, und die Leitweglenkung von diesem Vermittlungssystem 21/1 zu dem Vermittlungssystem 21/2, in dessen Einzugsbereich sich die gerufenen Slave-Testeinrichtung 1' befindet.

In einer zweiten Variante wird der abgehende Ruf von der Slave-Testeinrichtung 1' initiiert. Dazu wird die Slave-Testeinrichtung 1' von der Master-Testeinrichtung 1 zum Ablauf des Testvorganges aufgefordert, wobei diese Aufforderung über einen alternativen Verbindungsweg erfolgen kann und Bestandteil der oben beschriebenen Synchronisation zwischen den Testeinrichtungen 1 und 1' ist. Bei analoger Vorgehensweise wird in dieser Variante des Testvorganges die Rufnummernanalyse in dem der Slave-Testeinrichtung 1' zugeordneten Vermittlungssystem 21/2 sowie die Leitweglenkung von dem Vermittlungssystem 21/2 zu dem Vermittlungssystem 21/1, in dessen Einzugsbereich sich die Master-Testeinrichtung 1 befindet, überprüft.

Der alternative Verbindungsweg wird dabei über das Festnetz 6 geführt, wobei das Modem der Master-Testeinrichtung 1 über eine Festnetzanschlußleitung 7 mit Festnetzvermittlungsstelle 61/1 verbunden ist und das Modem der Slave-Testeinrichtung 1' über eine andere Festnetzanschlußleitung 7' mit einer zweiten Festnetzvermittlungsstelle 61/2 verbunden ist. Die Festnetzvermittlungsstellen 61/1 und 61/2 sind im Festnetz 6 netztypisch miteinander verbunden.

Ein weiterer Prüfkomplex betrifft die Herstellung von Verbindungen zwischen einem Mobilteilnehmer und einem Festnetzteilnehmer. Dabei wird der Festnetzteilnehmer durch das Modem in der jeweiligen Testeinrichtung 1 und 1' dargestellt. Im einzelnen sind in diesem Komplex vier Varianten konfigurierbar:

| | | | | | |
|---|---|---|---|---|---|
| Variante A: | Mobilteilnehmer - | Master | an | Modem - | Slave |
| Variante B: | Modem - | Master | an | Mobilteilnehmer - | Slave |
| Variante C: | Mobilteilnehmer - | Slave | an | Modem - | Master |
| Variante D: | Modem - | Slave | an | Mobilteilnehmer - | Master |

Dabei werden die Testvorgänge nach den Varianten A und B direkt durch die Master-Testeinrichtung 1 initiiert und ausgeführt. Die Testvorgänge nach den Varianten C und D werden ausgehend von der Master-Testeinrichtung 1 über den oben beschriebenen alternativen Verbindungsweg in der Slave-Testeinrichtung 1' initiiert und von der Slave-Testeinrichtung 1' auftragsgemäß ausgeführt.

Darüber hinausgehende Testkonfigurationen, wie beispielsweise Mobilteilnehmer ruft Modem der eigenen Testeinrichtung 1 oder 1' und umgekehrt, werden hinsichtlich der prüfbaren Signalisierungsprotokolle und Leitweglenkungen in vorteilhafter Weise durch die Testvorgänge nach den Varianten A bis D mit abgedeckt und brauchen daher nicht separat geprüft zu werden.

Im weiteren wird stellvertretend für diesen Prüfkomplex der Testvorgang nach Variante A beschrieben. Die Testvorgänge nach den Varianten B bis D erfolgen völlig analog bei jeweils komplementären Netzeintrittspunkten sowie Rufrichtungen, wobei dieselben Protokollinstanzen des jeweils anderen Vermittlungssystems 21/1 oder 21/2 geprüft werden.

Beim Verbindungsaufbau von Mobilteilnehmern der Master-Testeinrichtung 1 zum Modem der Slave-Testeinrichtung 1' gemäß Variante A wird mit einem beliebigen Datenmodul der Master-Testeinrichtung 1 die Rufnummer, die der Festnetzanschlußleitung 7' des Festnetzes 6 zugeordnet ist, gewählt. Dabei wird in dem Vermittlungssystem 21/1 aus der gewählten Rufnummer die Leitweginformation ermittelt, wonach der Ruf an genau das Vermittlungssystem 21/2 weiterzuleiten ist, das über einen Festnetzzugang 72 direkt mit genau der Festnetzvermittlungsstelle 61/2 des Festnetzes 6 verbunden ist, mit der das gerufene Modem der Slave-Testeinrichtung 1' über die Festnetzanschlußleitung 7' verbunden ist. Dabei werden die Rufnummernanalyse in den Vermittlungssystemen 21/1 und 21/2 sowie die Leitweglenkung innerhalb des Mobilkommunikationsnetzes 2 und die netzübergreifende Leitweglenkung vom Mobilkommunikationsnetz 2 zum Festnetz 6 überprüft. Darüber hinaus werden die Signalisierungsprotokolle innerhalb des Mobilkommunikationsnetzes 2 sowie der Anwenderteil für das Fernsprechen in Bezug auf die Kommunikation zwischen dem Mobilkommunikationsnetz 2 und dem Festnetz 6 geprüft.

Die o. g. Signalisierungsprotokolle sind in der eingangs erwähnten Veröffentlichung beschrieben und bedürfen daher als solche keiner weiteren Erläuterung.

Darüber hinaus ist vorgesehen, bei Verbindungen zwischen Mobilteilnehmern die Funktionsfähigkeit des Sprachkanals zu testen, der unabhängig vom Signalisierungskanal betrieben wird. Dazu wird bei bestehender Verbindung ein Tonsignal des NF-Generators 126 gesendet, das im Frequenzdiskriminator 125 der jeweiligen Gegenstelle selektiert wird. Dabei wird getestet, ob die Verbindungsleitungen zwischen den Einrichtungen des Mobilkommunikationsnetzes 2, also den Vermittlungssystemen 21/1 und 21/2 untereinander sowie zwischen den Vermittlungssystemen 21/1 und 21/2 und den jeweils angeschlossenen Basisstationssystemen 22/1 bis 22/4, exakt angeschlossen sind, da beispielsweise beim Vertauschen der paarigen Leitungsenden eine Sprachkommunikation nicht zustande kommt.

Alle Testvorgänge sind als konfigurierbare Programmstapel, die aus Befehlsmodulen entsprechend dem vorgesehenen Testablauf zusammengesetzt sind, aufgebaut. Die einzelnen Befehlsmodule sind in auf dem Steuerrechner 11 direkt ausführbare Programmdateien realisiert.

## Patentansprüche

1. Verfahren zum Überprüfen der Leitweglenkung und Gebührenerfassung in einem Mobilkommunikationsnetz, das im Wesentlichen aus einer Mehrzahl untereinander vernetzter Vermittlungssysteme, die an die Basisstationssysteme anschließbar sind, und einer Mehrzahl Mobilteilnehmer besteht, wobei die Mobilteilnehmer mit mindestens einem Basisstationssystem in Funkverbindung zu treten ausgerüstet sind, die Vermittlungssysteme zumindest aus einer Vermittlungseinrichtung und einer Mehrzahl von Datenbanken zur Verwaltung von Mobilteilnehmerdaten bestehen und jeder Mobilteilnehmer mit einem kartenartigen Datenmodul ausgestattet ist, dessen Daten in einer Datenbank eine der Vermittlungssysteme zumindest teilweise gespeichert sind, mittels einer Testeinrichtung (1) mit einem Steuerrechner (11) und wenigstens einem Test-Mobilteilnehmergerät (14), das anstelle eines Datenmoduls ein Adaptermodul aufweist, und einer Multiplexereinrichtung (12) zur Aufnahme einer Mehrzahl von Datenmodulen (3),
mit folgenden Verfahrensschritten:
- Selektieren von einem der Datenmodule aus der Mehrzahl von Datenmodulen (3) in der Multiplexereinrichtung (12) mittels eines Steuersignals von dem Steuerrechner (11);
- Zuführen von Daten des selektierten Datenmoduls zu dem Adaptermodul des Test-Mobilteilnehmergeräts (14); und
- Emulieren des selektierten Datenmoduls in dem Test-Mobilteilnehmergerät (14).

## Claims

1. Method for testing the routing and charge registration in a mobile communication network, which essentially comprises a plurality of interconnected switching systems connectable to the base station systems, and a plurality of mobile subscribers, wherein the mobile subscribers are equipped to establish radio contact with at least one base station system, the switching systems comprise at least one switching device and a plurality of databases for the administration of mobile subscriber data, and each mobile subscriber is equipped with a card-like data module at least some of whose data are stored in a database of one of the switching systems, by means of a testing device (1) having a control computer (11) and at least one test mobile subscriber device (14) comprising an adapter module instead of a data module, and a multiplexer device (12) for the reception of a plurality of data modules (3),
comprising the steps of:
- selecting one of the data modules from the plurality of data modules (3) in the multiplexer device (12) by means of a control signal from the control computer (11);
- supplying data of the selected data module to the adapter module of the test mobile subscriber device (14); and
- emulating the selected data module in the test mobile subscriber device (14).

## Revendications

1. Procédé pour examiner le routage et la taxation dans un réseau de communication mobile qui se compose principalement d'une pluralité de systèmes de commutation connectés entre eux en réseau, auxquels peuvent être raccordés des systèmes de station de base, et une pluralité d'abonnés mobiles sachant que les abonnés mobiles sont équipés d'au moins un système de station pour entrer en liaison radio, que les systèmes de commutation sont composés d'au moins un appareil de commutation et d'une pluralité de bases de données pour la gestion des données d'abonnés mobiles et que chaque abonné mobile est équipé d'un module de données de type carte, dont les données sont enregistrées au moins partiellement dans une base de données d'un des systèmes de commutation, au moyen d'un appareil de test (1) avec un calculateur de commande (11) et au moins un appareil test d'abonné mobile (14), qui présente un module adaptateur au lieu d'un module de données, et avec un appareil de multiplexage (12) pour la réception d'une pluralité de modules de données (3),
avec les étapes suivantes :
- sélection d'un des modules de données parmi la pluralité de modules de données (3) dans l'appareil de multiplexage (12) au moyen d'un signal de commande du calculateur de commande (11) ;
- conduite de données du module de données sélectionné vers le module adaptateur de l'appareil test d'abonné mobile (14) ;
- émulation du module de données sélectionné dans l'appareil test d'abonné mobile (14).
